Europäisches Patentamt

European Patent Office

Office européen des brevets

(19)

(11) **EP 0 803 062 B2**

(12) **NEUE EUROPÄISCHE PATENTSCHRIFT**

(45) Veröffentlichungstag und Bekanntmachung des Hinweises auf die Entscheidung über den Einspruch:
**26.01.2005   Patentblatt 2005/04**

(45) Hinweis auf die Patenterteilung:
**12.04.2000   Patentblatt 2000/15**

(21) Anmeldenummer: **96900528.9**

(22) Anmeldetag: **11.01.1996**

(51) Int Cl.$^7$: **G01N 25/20**

(86) Internationale Anmeldenummer:
**PCT/DE1996/000071**

(87) Internationale Veröffentlichungsnummer:
**WO 1996/021857 (18.07.1996 Gazette 1996/33)**

(54) **VERFAHREN UND VORRICHTUNG ZUR BESTIMMUNG DER SCHICHTDICKE, DER LEITFÄHIGKEIT UND/ODER DER SCHICHTKONTAKTGÜTE VON AUF SUBSTRATEN AUFGETRAGENEN SCHICHTEN**

PROCESS AND DEVICE FOR DETERMINING THE LAYER THICKNESS, THE CONDUCTIVITY AND/OR THE LAYER CONTACT QUALITY OF LAYERS DEPOSITED ON SUBSTRATES

PROCEDE ET DISPOSITIF PERMETTANT DE DETERMINER L'EPAISSEUR, LA CONDUCTIBILITE ET/OU LA QUALITE DE CONTACT DE COUCHES APPLIQUEES SUR DES SUBSTRATS

(84) Benannte Vertragsstaaten:
**BE DE ES FR GB IT NL SE**

(30) Priorität: **13.01.1995  DE 19500883**
**07.06.1995  DE 19520788**

(43) Veröffentlichungstag der Anmeldung:
**29.10.1997   Patentblatt 1997/44**

(73) Patentinhaber: **OptiSense Gesellschaft für Optische Prozessmesstechnik mbH & Co. KG i.G.**
**44799 Bochum (DE)**

(72) Erfinder:
• **SCHULZ, Harald, Hans**
**D-58453 Witten-Annen (DE)**
• **KOHNS, Peter**
**D-44803 Bochum (DE)**

(74) Vertreter: **Pfenning, Meinig & Partner**
**Mozartstrasse 17**
**80336 München (DE)**

(56) Entgegenhaltungen:
EP-A- 0 427 943          EP-A- 0 463 938
WO-A1-81/03704       DE-A1- 3 939 877
GB-A- 1 403 950        US-A- 4 818 118
US-A- 4 875 175

• **JOURNAL OF PHYSICS D (APPLIED PHYSICS), 14 MARCH 1991, UK, Bd. 24, Nr. 3, ISSN 0022-3727, Seiten 428-436, LAU S K ET AL 'Transient thermal wave techniques for the evaluation of surface coatings'**
• **APPLIED PHYSICS LETTERS, 8 FEB. 1988, USA, Bd. 52, Nr. 6, ISSN 0003-6951, Seiten 442-444, TSUTSUMI N ET AL 'Measurement of thermal diffusivity for polymer film by flash radiometry'**
• **"Photoacoustic, Photothermal and Photochemical Processes at Surfaces and in Thin Films"; P. Hess, Springer-Verlag Berlin (1989); pages 163-164; figure 6.10. with description.**
• **"Techniques of flash radiometry"; P.W. Leung and A.C. Tam; Journal of Applied Physics, Band 56, volume 1, 1984; pages 153-161; page 153 figures 4 and 8 with description.**
• **"Photoacoustic and Photothermal Phenomena III"; Springer Series in Optical Sciences, Vol. 69; Herausgeber D. Bicanic; Springer Verlag Berlin, 1992, pages 672-678; page 672 figures 2, 5 and 6 with description.**
• **"Transient Thermal Wave Techniques for the Characterisation of Surface Coatings"; S.K. Lau, D.P. Almond, P.M. Patel; Conference Digest der 6th International Topical Meeting on Photoacoustic and Photothermal Phenomena; July 31st - August 3rd, 1989, pages 132,133.**

## Beschreibung

Die Erfindung betrifft ein Verfahren nach dem Oberbegriff des Anspruchs 1 und eine Vorrichtung zur Durchführung des Verfahrens. Die erfindungsgemäße Lösung ist neben der punktuellen Messung auch für die Überprüfung der räumlichen Homogenität von aufgetragenen Schichten geeignet. So können die Parameter von Schichten aus festem, flüssigen oder pulverförmigen Materialien bestimmt werden. Außerdem ist es möglich, die Messung an bewegten Meßobjekten durchzuführen, ohne daß eine Nachführung der Meßvorrichtung erforderlich ist. Letzteres bietet sich insbesondere bei der Anwendung direkt in der Produktion an.

Es ist bekannt, photothermische Meßverfahren zur Beurteilung von Schichten, insbesondere der Schichtdicken zu verwenden. Hierbei werden modulierte, kontinuierlich emittierende Lichtquellen verwendet, die eine thermische Welle im Meßobjekt erzeugen. Die thermische Welle wird an der Schichtgrenze zumindest teilweise reflektiert, dabei kann die Schichtdicke mittels der Phasenverschiebung zwischen der von der modulierten Lichtquelle ausgehenden Welle und der reflektierten thermischen Welle ermittelt werden. Die Amplitude der reflektierten thermischen Welle ist ein Maß für die erreichte Schichtkontaktgüte. Außerdem ist es bekannt, gepulste Lichtquellen, deren Impulsdauer und spektrale Lichtverteilung nicht auf die Schichtart und Schichtdicke der Probe optimiert sind, zu verwenden, um Schichten und oberflächennahe Bereiche von Festkörpern zu untersuchen. Diese Verfahren sind nicht für eine genaue quantitative Auswertung zur Bestimmung von Schichtparametern geeignet.

Die bekannten Meßverfahren, die thermische Wellen verwenden, weisen eine relativ lange Meßzeit auf, da die Amplitude und Phase des eingeschwungenen Zustandes einer thermischen Welle als Meßsignale verwendet werden.

So haben S.K. Lau, D.B. Almond und P.M. Patel in "Transient thermal wave techniques for the evaluation of surface coatings", 1261 Journal of Physics D: Applied Physics, 24 (1991) 14 March, No. 3, Bristol, GB, Seiten 428 bis 436 ein Verfahren zur Bestimmung von Schichtdicken beschrieben, das auf der Interferenz von thermischen Wellen basiert. Dabei müssen die mittels bevorzugt einer Laserlichtquelle auf die oberflächen gerichteten Lichtstrahlen durch Wärmeleitung in der Schicht und Reflexion an den Schichtgrenzen mehrfach durch die Schicht laufen, um an der Oberfläche zu interferieren.

Ein weiteres Verfahren zur Bestimmung der Dicke von aufgetragenen Schichten ist in US 4,818,118 beschrieben. Bei diesem Verfahren soll die Dicke einer räumlich homogen aufgetragenen Schicht bestimmt werden, in dem ein Laserstrahl auf eine Probe gerichtet wird und dort einen ersten Bereich der Beschichtung mit unbekannter Dicke erwärmt. Im Anschluß daran wird nach einer vorgegebenen Zeit die räumliche Temperaturverteilung über einen anderen Bereich der Beschichtung gemessen und die gemessene Temperaturverteilung mit Referenztemperaturverteilungen verglichen, die eine bestimmte Vergleichsprobe mit einer äquivalenten Beschichtung repräsentieren, woraus auf die Schichtdicke oder die Isolationseigenschaften der Beschichtung geschlossen werden kann.

Es ist daher Aufgabe der Erfindung, ein Verfahren und eine Vorrichtung zu schaffen, mit der Parameter von auf Substraten aufgetragenen Schichten in kurzer Zeit mit ausreichender Genauigkeit bestimmt werden können.

Erfindungsgemäß wird diese Aufgabe, durch die im Anspruch 1 für das Verfahren und die im kennzeichnenden Teil des Anspruchs 10 für die Vorrichtung genannten Merkmale, gelöst. Vorteilhafte Ausgestaltungen und Weiterbildungen ergeben sich bei Verwendung der in den untergeordneten Ansprüchen enthaltenen Merkmale.

Mit der erfindungsgemäßen Lösung können einzelne Schichten und Systeme solcher Schichten auf Festkörpersubstraten berührungslos und zerstörungsfrei charakterisiert werden. Dabei kann auf einfache Weise die Schichtdicke, die thermische Leitfähigkeit der Schicht oder die Schichtkontaktgüte an Grenzflächen benachbarter Schichten oder zum Substrat hin gemessen und bewertet werden. Das Verfahren und die erfindungsgemäße Vorrichtung können dabei direkt während des Beschichtungsprozesses von Substraten eingesetzt und die Meßergebnisse zur Steuerung des Beschichtungsprozesses herangezogen werden. Es kann aber auch im nachhinein in Form einer Qualitätskontrolle Verwendung finden.

Weiter sind neben punktuellen Messungen auch die Überwachung der räumlichen Homogenität durch linienoder rasterartige, flächige Vermessung der Beschichtung möglich. Dabei spielt es keine Rolle, ob die Schichten aus festen, flüssigen oder pulverförmigen Stoffen gebildet sind.

Ein wesentlicher Vorteil der erfindungsgemäßen Lösung besteht darin, daß die Messung auch an bewegten Meßobjekten durchgeführt werden kann, ohne daß eine parallele nachführende Bewegung des Meßsystems erforderlich ist. Dies führt zu einer wesentlichen Vereinfachung des Meßaufbaus.

Wird die Meßkonfiguration mit einem Abstandsmeßgerät komplettiert, kann die Meßgenauigkeit wesentlich erhöht werden, wenn der Abstand zwischen Meßobjekt, photothermischen Detektor und Lichtquelle mit einer geeigneten Vorrichtung in einem konstanten Abstand durch Regelung gehalten werden kann. Dabei wird der Abstand zum Meßobjekt permanent ermittelt und das Abstandssignal einer Regeleinheit zugeführt, die die Verschiebevorrichtung entsprechend aktiviert. Mit der Auswertung des zeitlichen Temperaturverhaltens in der Schicht ist eine wesentliche Verkürzung der erforderlichen Meßzeit, gegenüber den bekannten Lösungen verbunden. Dabei wird die Wellenlänge, des auf die zu charakterisierende Schicht oder das Schichtsystem zu richtenden Lichtes so gewählt, daß die optische Eindringtiefe $D_E$ für möglichst viele Schichtmaterialien klein im Vergleich zur zu messenden Schichtdicke $D_S$ ist. Dabei sollte das Verhältnis $D_S/D_E \geq 10$ sein. Licht im Wellenlängenbereich von Ultraviolett oder Infrarot kann für sehr viele farbige und auch im sichtbaren Spektralbereich transparente Schichten eingesetzt werden. Als Lichtquelle kommt ein gepulst arbeitender Laser, der Licht der jeweiligen Wellenlänge abstrahlt oder auch eine breitbandige Lichtquelle, die geeignet spektral gefiltert wird, in Frage. Mit einem elektrooptischen oder elektromechanischen Verschluß kann die Lichtimpulsdauer eingestellt und variiert werden. Bei der erfingsgemäßen Lösung ist es günstig, wenn die Lichtabsorption in einem oberflächennahen Bereich der zu bewertenden Schicht erfolgt und eine entsprechend geeignete Wellenlänge verwendet wird. Durch thermische Diffusion gelangt ein gewisser Anteil der von der Schicht absorbierten Lichtenergie aus dem oberflächennahen Bereich der Schicht, der durch die optische Eindringtiefe $D_E$ bestimmt ist, weiter in die Schicht hinein. Dieser Vorgang bestimmt im wesentlichen das Temperaturverhalten der Schicht. Für die Aufheizung der Schichtoberfläche ist entscheidend, wieviel von der absorbierten Lichtenergie durch thermische Diffusion innerhalb der Dauer des Lichtimpulses aus dem oberflächennahen Absorptionsbereich weiter in die Schicht propagiert.

Ist die Schichtdicke $D_S$ klein im Vergleich zum Beleuchtungsfleckdurchmesser $D_L$ kann für eine theoretische Beschreibung, eine eindimensionale Wärmediffusion angenommen werden. Bei im Verhältnis kleiner Lichtimpulsdauer $t_L$ gegenüber der thermischen Diffusonszeit $t_D$, kann die thermische Diffusion während der Lichtimpulsdauer, die zur Abkühlung an der Oberfläche führt, gegenüber der Aufheizung der Oberfläche durch Lichtabsorption vernachlässigt werden. Dabei wird die Diffusionszeit $t_D$ als Zeit definiert, bei der die Schichtoberflächentemperatur auf den Wert 1/e des maximalen Temperaturwertes $T_{max}$ abgefallen ist. Die Diffusionszeit $t_D$ kann ebenfalls zur Bestimmung der Schichtcharakteristika herangezogen werden.

Mit dem erfindungsgemäßen Verfahren kann die Lichtimpulsdauer variiert werden. So führt ein kurzer Lichtimpuls zu einem relativ steilen Temperaturanstieg im Vergleich zum Temperaturabfall an der Oberfläche, der durch die thermische Diffusion in der Schicht hervorgerufen wird. Liegen Lichtimpulsdauer und thermische Diffusionszeit in vergleichbarer Größenordnung verhalten sich Temperaturanstieg und Temperaturabfall entsprechend. Bei relativ kleiner thermischer Diffusionszeit im Verhältnis zur Lichtimpulsdauer ist ein geringer Anstieg der Oberflächentemperatur zu verzeichnen, und das Maximum der Temperatur wird zum Zeitpunkt des Maximum des Lichtimpulses erreicht. Demzufolge wird die Oberflächentemperatur der Schicht durch den Lichtimpuls in bezug auf dessen Zeitdauer bestimmt.

Bei Variation der Lichtimpulsdauer werden zeitliche Charakteristiken des Oberflächentemperaturverlaufes T(t) erreicht, die proportional zur thermischen Leitfähigkeit und zur Schichtdicke der jeweiligen Schicht sind. Bei bekannter thermischer Wärmeleitfähigkeit kann relativ einfach die Schichtdicke durch die Auswertung des Temperaturverlaufes (Temperaturanstieg und/oder Temperaturabfall) oder gar der Maximaltemperatur erfolgen. Es ist aber auch möglich, Leitfähigkeit und Schichtdicke zu bewerten, wenn das Temperaturverhalten während der Aufheiz- und Abkühlphase theoretisch mit einem Modell beschrieben werden können. Möglich ist dies, wenn der Schichtaufbau als sogenannter "thermischer Kondensator" betrachtet wird.

Bei einem kurzen Lichtimpuls im Vergleich zur Diffusionszeit, ist der durch Strahlendurchmesser und optischer Eindringtiefe bestimmte Wärmestrom innerhalb der Lichtimpulsdauer klein. Für eine solche Konstellation wird das Abkühlverhalten ausgewertet. Liegen Lichtimpulsdauer und thermische Diffusionszeit in der gleichen Größenordnung, kann der gesamte Temperaturverlauf benutzt werden. Mit Variation der Lichtimpulsdauer kann das Temperaturverhalten zur Ermittlung der Schichtparameter ebenfalls ausgewertet werden.

Mittels Abstimmung von Strahldurchmesser (Beleuchtungsfleckgröße) und detektierten Bereich kann die Diffusion in normaler oder lateraler Richtung relativ zur Oberfläche der Schicht betrachtet werden. Die Beschreibung kann theoretisch, eindimensional mit Hilfe der Fick'schen Gleichungen erfolgen.

Neben dieser Möglichkeit kann jedoch auch eine rein empirische Auswertung erfolgen, wobei charakteristische Temperaturverläufe, bei Variation von Impulsdauer oder Wellenlänge für definierte, bekannte Schichtdicken gemessen worden sind und diese Meßwerte mit in nachfolgenden Messungen ermittelten, in einem Speicher für einen Vergleich abgelegten Meßwerten (z.B. in Form von Temperaturverläufen) von unbekannten Schichten eines gleichartigen Schichtsystems verglichen werden. Die empirische Auswertung ist für eine direkte Prozeßüberwachung im industriellen Einsatz geeignet.

Ist die thermische Leitfähigkeit des Materials der Schicht bekannt, kann die Schichtdicke allein mit einer einzigen konstanten Impulsdauer bestimmt werden. Dabei kann die Impulsdauer an die gewünschte Meßgeschwindigkeit angepaßt sein. Bei Schichtsystemen hängt das Temperaturverhalten an der Oberfläche davon ab, wie die thermische Leitfähigkeit (thermischer Widerstand) des gesamten Schichtsystems ist und welche Wärmeleitfähigkeit das Substrat (Wärmesenke) hat. Benachbarte Schichten bzw. das benachbart angeordnete Substrat beeinflussen sich, in bezug auf das Abkühlverhalten. Befindet sich eine Schicht mit hoher thermischer Leitfähigkeit auf einem Substrat oder ist neben einer weiteren Schicht mit einer niedrigen Wärmeleitfähigkeit angeordnet, kühlt sich die Oberfläche der ersten betrachteten Schicht langsamer ab, als wenn die benachbarte Schicht oder das Substrat gleichfalls eine gute thermische Leitfähigkeit haben. Daher ist der Temperaturverlauf der Oberflächentemperatur vom gesamten Schichtsystem abhängig und Änderungen der Monotonie

$$(\textit{Krümmung } \frac{dT(t)}{dt})$$

des Temperaturverlaufes T (t) sind auf die Unterschiede in bezug auf die thermische Leitfähigkeit der einzelnen Schichten des Schichtsystem zurückzuführen. Infolge dessen kann durch empirischen Vergleich mit Modellschichtsystemen oder auch durch Vergleich mit der theoretischen Beschreibung im Modell des "thermischen Kondensators" aus der Temperaturcharakteristik, des gesamten Schichtsystems die thermische Leitfähigkeit und die Schichtdicke der einzelnen Schichten bestimmt werden.

Nachfolgend soll das theoretische Modell des "thermischen Kondensators" weiter beschrieben werden:

Dabei ist Q die thermische Ladung des thermischen Kondensators nach der Aufladung durch den Lichtimpuls. Die Aufladung kann folgendermaßen beschrieben werden:

$$dQ/dt=c*\varrho*\pi*R_L{}^2*[D_E-x_D(t)]*(dT(t)/dt) \; =$$
$$\pi*R_L{}^2*I_{Labs}(t) \qquad\qquad\qquad\qquad (1)$$

$$Q=E_{Labs}=C*\varrho*\pi*R_L^2*[D_E*(T(t_L)-T_0)-\int_0^{tL} x_D(t)*(dT(t)/dt)]\,(2)$$

$\approx 0$ für $t_L \ll t_D$

Dabei sind :

| | |
|---|---|
| c | spezifische Wärme des Schichtmaterials; |
| $\varrho$ | Dichte des Schichtmaterials; |
| $\pi*R_L{}^2$ | Fläche des Beleuchtungsfleckes auf der Schicht; |
| $I_{Labs}$ | absorbierte Lichtintensität; |
| $E_{Labs}$ | absorbierte Lichtenergie; |
| $x_D(t)$ | Wärmediffusionsstrecke zur Zeit t |
| $t_D=D_S*D_E*\varrho*c/\chi$ | charakteristische Diffusionszeit; |
| $D_S$ | Schichtdicke; |
| $\chi$ | Wärmeleitfähigkeit der Schicht. |
| $T_0$ | Umgebungstemperatur |

Während der Impulsdauer wird die absorbierte Lichtenergie $E_{Labs}$ in einem bestimmten Volumen aufgenommen, wobei das Volumen durch die Fläche des Beleuchtungsfleckes ($\pi*R_L{}^2$) und die optische Eindringtiefe $D_E$ und die Tiefe der thermischen Diffusion $x_D(t_L)$ bestimmt wird. Mit der Annahme, daß $t_L$ sehr viel kleiner als die charakteristische Diffusionszeit $t_D$ ist, kann mit Gleichung (2) die maximale Temperatur $T_{max} = T(t_L)$ aus der thermischen Ladung Q bestimmt werden. Dies ist möglich, da die anderen Parameter bei gleichzeitiger Kenntnis des Schichtmaterials und der Lichtwellenlänge ($D_E = D_E(\lambda)$) bekannt sind.

Für den Fall, daß der Beleuchtungsfleckdurchmesser $2*R_L$ groß gegenüber der Schichtdicke $D_S$ ist, gilt die eindimensionale Näherung der thermischen Diffusion. Dadurch ergibt sich der räumliche Temperaturgradient

$$grad_x T = (T(t_L)-T_0)/D_E = -j_x\!\rightarrow/\chi \qquad\qquad (3)$$

Dabei ist $j\rightarrow$ die Wärmestromdichte entsprechend dem ersten Fickschen Gesetz.

Nach dem zweiten Fick'schen Gesetz gilt dann für $t=t_L$

$$(\partial T(t_L)/\partial t)=(\chi/\rho*c)*(\partial^2 T/\partial x^2) \qquad\qquad (4)$$

Mit dem Ansatz $T(x,t') = (T(t_L)-T_0)*exp(\alpha*t*\beta*x)$ und $t' = t_L+t$ wird die Differenzialgleichung

$$\partial T/\partial t = \alpha/\beta^2 * \partial^2 T/\partial x^2 \tag{5}$$

gelöst. Es gilt dabei $\delta T/\delta t' = \delta T/\delta t$.

$$\partial T/\partial t' = \partial T/\partial t$$

Damit kann durch den Vergleich der Gleichungen (5) und (4)

$$\alpha/\beta^2 = \chi/\varrho * c$$

bestimmt werden.

Nach dem Ende des Lichtimpulses zur Zeit $t' = t_L + t$ ist entsprechend Gleichung (3) die für die Änderung des Temperaturgradienten bestimmende Größe nicht mehr die optische Eindringtiefe $D_E(\lambda)$ des anregenden Lichtimpulses, sondern die Schichtdicke $D_S$.

Daher gilt für diese Änderung

$$(\partial^2 T/\partial x^2) = (T(t_L)-T_0)*\exp(\alpha t+\beta x)/(D_E*D_S) \tag{6}.$$

Dadurch ist nach den Gleichungen (4) und (5)

$$\partial^2 T/\partial x^2 = T/(D_E*D_S) = (\varrho*c/\chi)*\partial T/\partial t = (\varrho*c/\chi)*\alpha*T \tag{7}$$

Demzufolge ist

$$(\varrho*c*\alpha/\chi) = 1/(D_E*D_S) \text{ und somit } \alpha = \chi/(\varrho*c*D_E*D_S) \tag{8}.$$

Der reziproke Wert $\alpha^{-1} = t_D$ entspricht bereits der oben genannten charakteristischen Diffusionszeit. Damit ergibt sich der zeitabhängige Temperaturverlauf an der Oberfläche der Schicht nach

$$T(t) = (T(t_L)-T_0)*\exp((-\chi/\varrho*c*D_S*D_E)*t) \tag{9}.$$

Analog dazu ist die Entladung eines elektrischen Kondensators mit

$$U(t) = Q_{el}/C_{el}*\exp((-1/(R_{el}*C_{el}))*t) \tag{10}$$

bestimmbar, wie die Entladung des thermischen Kondensators entsprechend Gleichung (9).

Vergleicht man die Gleichungen (9) und (10) können die äquivalenten Parameter bei der thermischen Kondensatorentladung gegenüber der elektrischen Kondensatorentladung erkannt werden. Der thermische Widerstand $R_{th}$ entspricht dem elektrischen Widerstand $R_{el}$ und ist

$$R_{th} = D_S/(x*\pi*R_L^2) \tag{11}.$$

Die thermische Kapazität

$$C_{th} = c * \varrho * D_E * \pi * R_L{}^2 \quad (12)$$

entspricht der elektrischen Kapazität $C_{el}$. Und die Temperatur $T(t)$ ist äquivalent zur elektrischen Spannung $U(t)$. Mit Hilfe dieser Übertragung kann jeder Schicht ein entsprechender Widerstand $R_{th}$ und eine Kapazität $C_{th}$ zugeordnet und das thermische Kondensatormodell angewendet werden. Der Gleichung (9) ist zu entnehmen, daß der Temperaturabfall exponentiell erfolgt und der Exponent als unbekannte Größe lediglich die Schichtdicke $D_S$ enthält.

Da der photothermische Detektor den oberflächennahen Bereich mit der zugehörigen thermischen Strahlung und nicht nur einen Ort $x = 0$ erfaßt, muß die optische Eindringtiefe, bei der benutzten infraroten Wellenlänge des Detektors $D_E(\lambda_{Det}) = D_{Det}$ berücksichtigt werden. Dies ist durch die räumliche Mittelung der Gleichung (7) mit Hilfe eines Gewichtsfaktors $g(x) = \exp(-x/D_{Det})$ für die gesamte zur betrachtende Schichtdicke möglich. Mit dem Separationsansatz $T(x,t) = T(x)*T(t)$ kann ein zusätzliches Integral für die ortsabhängige Funktion $T(x)$, das einen weiteren Vorfaktor für Gleichung (8) liefert, der für den Fall relevant wird, wenn $D_{Det}$ annähernd $D_s$ ist, erhalten werden. Für den Fall, daß $D_{Det}$ sehr viel kleiner als $D_s$ ist, kann dieser Faktor vernachlässigt werden.

Die räumliche Mittelung der Temperatur kann mit folgender Gleichung vorgenommen werden:

$$\langle T(x) * T(t) \rangle D_{Det} = T(t) * \int_0^{D_s} T(x) * \exp(-x/D_{Det}) * dx / D_{Det} \quad (13)$$

mit $T(x) = \exp(-\chi\beta)$

Die Entladung des thermischen Kondensators erfolgt über den thermischen Widerstand des Substrates und den thermischen Widerstand der Schicht bzw. bei mehreren Schichten über den Widerstand des gesamten Schichtsystems. Dabei bestimmt das Verhältnis des thermischen Widerstandes des Substrates $R_A$ gegenüber dem thermischen Widerstand der zu bestimmenden Schicht $R_S$ bzw. den thermischen Widerstand des Schichtsystemes (für diesen Fall ist $R_S$ der Gesamtwiderstand) die Dynamik der Temperaturcharakteristik bei der Variation von Schichtdicke und Leitfähigkeit einer einzelnen Schicht. Im Falle, daß ein Substrat mit hoher Wärmeleitfähigkeit und demzufolge einem niedrigen thermischen Widerstand $R_A$ im Vergleich zum Widerstand $R_S$ betrachtet wird, wird der Temperaturabfall durch den Schichtwiderstand $R_S$ bestimmt. In diesem Fall sollte ein Lichtimpuls verwendet werden, dessen Impulsdauer $t_L$ klein gegenüber der thermischen Diffusionszeit $t_D$ klein ist. Ist dagegen der thermische Widerstand des Substrates $R_A$ groß gegenüber dem Widerstand der zu bestimmenden Schicht $R_S$, wird der Temperaturabfall an der Oberfläche des Meßobjektes (Entladung des thermischen Kondensators) durch den thermischen Widerstand des Substrates $R_A$ im wesentlichen bestimmt. Daher ist in diesem Fall die Dynamik des Temperaturabfalls der Meßobjektoberfläche in bezug auf die erfaßbaren Unterschiede von Schichtdicke und Leitfähigkeit der Schicht, begrenzt. Bei solchen Verhältnissen ist daher bevorzugt die Aufheizung der Oberfläche des Meßobjektes zu verwenden, die durch den thermischen Widerstand des Substrates $R_A$ nicht beeinflußt wird. Das Verhältnis von Impulsdauer des Lichtimpulses $t_L$ in bezug auf die thermische Diffusionszeit $t_D$ sollte daher zur Erreichung einer maximalen Meßgeschwindigkeit und Meßdynamik optimiert werden. Die Impulsdauer ist aus diesem Grunde so einzustellen, daß die Differenz von zwei Temperaturverläufen mit jeweils unterschiedlichen Schichtdicken und Leitfähigkeiten maximiert wird.

Bei Systemen mit mehreren Schichten kann die zeitliche Temperaturcharakteristik, wie die Entladezeit eines Kondensators, berechnet werden, der mit einem Netzwerk von verschiedenen Widerständen verbunden ist. Hierfür wird jeder Schicht ein ganz bestimmter Widerstand zugeordnet. Mit einem aus dem Netzwerk abgeleiteten Ersatzschaltbild kann der zeitabhängige Entladeverlauf des Kondensators berechnet werden, der der jeweiligen Schicht zuzuordnen ist, von der die thermische Strahlung mit dem photothermischen Detektor erfaßt wird. Normalerweise wird dies die erste Schicht auf der Oberfläche des Meßobjektes sein.

Bei Schichtsystemen, bei denen die oberste Schicht transparent ist, beispielsweise eine Klarlackschicht, kann die Lichtabsorption je nach Wahl der Lichwellenlänge erst in der zweiten Schicht erfolgen und die Berechnung muß für diese als zweiten Kondensator bewertete Schicht erfolgen. Sofern die erste Schicht für die Beobachtung der thermischen Strahlung nicht transparent ist, muß dann die Entladecharakteristik des thermischen Kondensators der zweiten Schicht entsprechend dem Spannungsabfall am thermischen Widerstand der ersten Schicht berechnet werden. Dazu muß ein Ersatzschaltbild bestimmt werden, das alle thermischen Widerstände der vorkommenden Schichten und die thermische Kapazität der zweiten Schicht berücksichtig. Auf diese Weise kann für einen solchen Schichtaufbau der zeitabhängige Temperaturverlauf (Spannungsverlauf) bezüglich des thermischen Widerstandes der ersten Schicht berechnet werden.

Für das Ersatzschaltbild können je nach Aufbau des Schichtsystems und Ort der lokalen Lichtabsorption in diesem Schichtsystem eine Reihen- oder auch eine Parallelschaltung von Kondensatoren und Widerständen verwendet werden. Nachfolgend soll die Erfindung an Hand von Ausführungsbeispielen näher beschrieben werden.

Dabei zeigt:

Figur 1   prinzipiell eine bekannte photothermische Schichtdickenmessung mit thermischen Wellen;
Figur 2   ein elektrisches Schaltbild zur Ladung und Entladung eines Kondensators;
Figur 3   die Entladecharakteristik eines Kondensators;
Figur 4   einen schematischen Aufbau einer erfindungsgemäßen Vorrichtung;
Figur 5   schematisiert den Aufbau eines Zweischichtsystems;
Figur 6   ein Ersatzschaltbild für den Mehrschichtaubau nach Figur 5;
Figur 7   den zeitlichen Temperaturverlauf bei kleiner Lichtimpulsdauer;
Figur 8   den Temperaturverlauf bei annähernd gleicher Lichtimpulsdauer und Diffusionszeit;
Figur 9   den Temperaturverlauf bei sehr großer Lichtimpulsdauer;
Figur 10  den Temperaturverlauf bei einer Schichtkombination einer gut wärmeleitenden Schicht mit einer schlecht wärmeleitenden Schicht;
Figur 11  den Temperaturverlauf bei einer Kombination von zwei gut wärmeleitenden Schichten und
Figur 12  einen schematischen Aufbau einer erfindungsgemäßen Vorrichtung mit einem Abstandsmeßsystem.

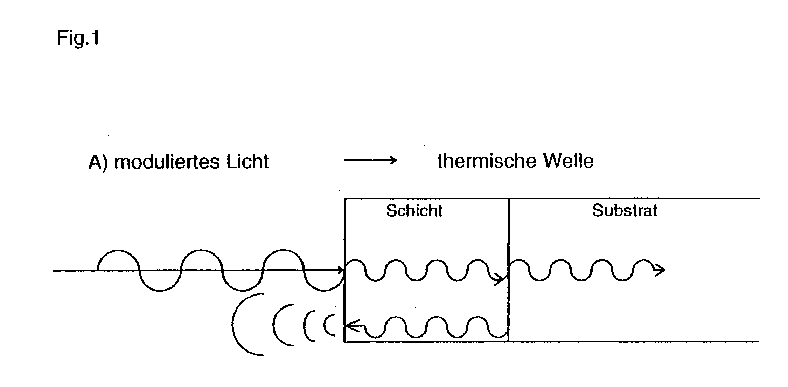

Die Figur 1 zeigt schematisch ein bekanntes photothermisches Meßverfahren, bei dem moduliertes Licht auf eine auf einem Substrat aufgetragenen Schicht gestrahlt wird. Die Absorption der modulierten Lichtwelle erzeugt eine thermische Welle, die durch die Schicht propagiert und an der Grenzfläche Schicht/Substrat teilweise reflektiert wird. Die reflektierte thermische Welle erzeugt eine zeitliche Modulation der Schichtoberflächentemperatur, die eine Phasenverschiebung zur modulierten Lichtwelle aufweist. Im eingeschwungenen Zustand liefert die Phasenverschiebung zwischen Lichtwelle und reflektierter thermischer Welle, die gewünschte Schichtdicke. Die Amplitude der reflektierten thermischen Welle ist umso größer je geringer die Kontaktgüte zwischen Schicht und Substrat ist. Zur Bestimmung dieser Parameter ist es jedoch erforderlich, daß ein eingeschwungener Zustand erreicht wird. Bei Schichtdicken im Mikrometerbereich ist hierzu eine Meßzeit von einigen Sekunden erforderlich ist, was für viele Einsatzzwecke zu langsam ist.

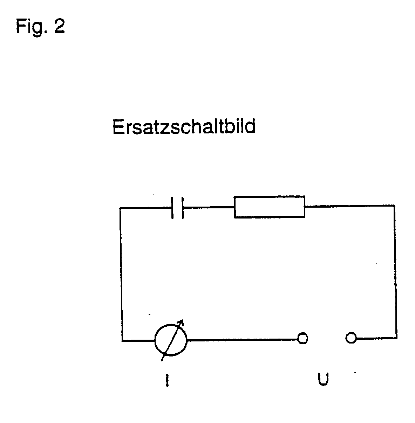

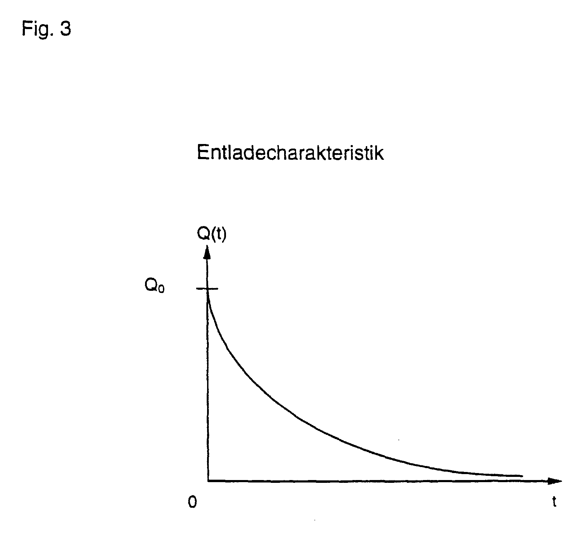

Die Figur 2 ist ein Ersatzschaltbild, bei dem ein einschichtiger Aufbau auf einem Substrat, wie ein elektrischer Kondensator betrachtet wird, der über einen Widerstand entladen wird. Figur 3 stellt die zeitabhängige Entladecharakteristik des elektrischen Kondensators dar, die dem zeitlichen Abklingen der Oberflächentemperatur der Schicht entspricht, die mit einem Lichtimpuls bestrahlt wurde.

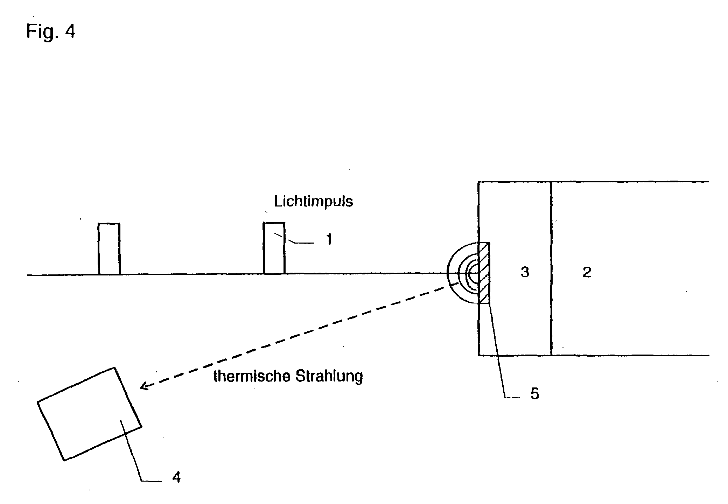

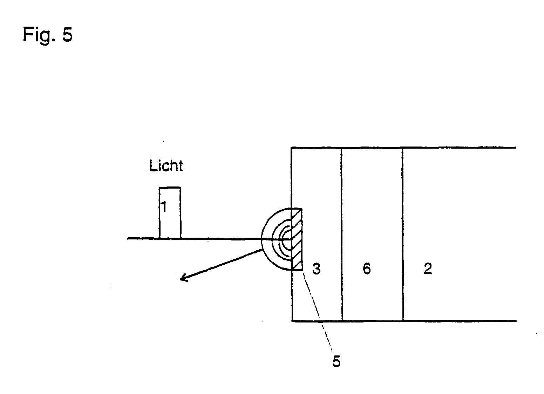

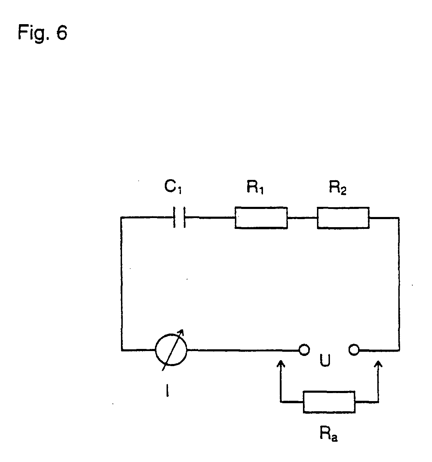

Die Figur 4 zeigt einen erfindungsgemäßen Meßaufbau, bei dem ein Lichtimpuls von einer Lichtquelle auf die auf einem Substrat 2 aufgebrachte Schicht 3 gestrahlt und die so hervorgerufene Temperaturbeeinflussung mit Hilfe eines thermooptischen Detektors 4 erfaßt wird. Dabei ist der aufgeheizte Bereich 5 der Schicht gestrichelt dargestellt. Die Impulsdauer ist im dargestellten Fall sehr viel kleiner als die Diffusionszeit. Der Durchmesser der Laseranregung (Beleuchtungsfleckdurchmesser) ist für ein eindimensionales Diffusionsmodell angepaßt. In der Figur 5 ist schematisch ein zweischichtiges System dargestellt in dem auf ein Substrat 2 zwei Schichten 3 und 6 aufgetragen sind. Das entsprechende Ersatzschaltbild ist der Figur 6 zu entnehmen. Dabei sind $C_1$ und $R_1$ thermischer Kondensator und Widerstand der Schicht 3 und $R_2$ thermischer Widerstand der Schicht 6. Die Entladung des "thermischen Kondensators" $C_1$ erfolgt über die thermischen Widerstände der Schicht 3 (Widerstand $R_1$), der Schicht 6 (Widerstand $R_2$) und den thermischen Widerstand des Substrates (Widerstand $R_a$).

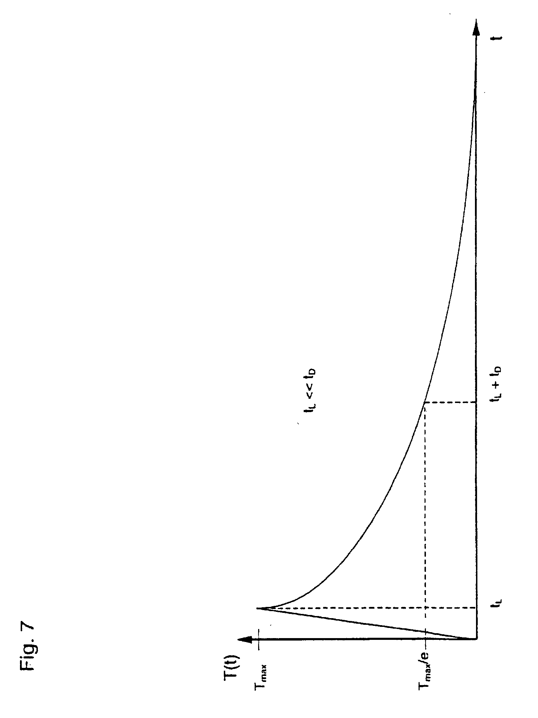

Das in der Figur 7 dargestellte Diagramm gibt den zeitlichen Temperaturverlauf für den Fall wieder, daß eine sehr kleine Lichtimpulsdauer $t_L$ gegenüber der charakteristischen Diffusionszeit $t_D$ durch kurzzeitiges Ein- und Ausschalten der Lichtquelle oder mit Hilfe eines optoelektronischen bzw. elektromechanischen Verschlusses eingestellt ist. In diesem Fall wird die maximale Temperatur Tmax nach kurzer Zeit erreicht. Weiter ist dieser Darstellung der Zeitpunkt zu entnehmen, an der die maximale Temperatur $T_0$ auf den Wert $T = T_0 {}^* e^{-1}$ abgefallen ist, der zur Charakterisierung der Schicht als geeignete Größe verwendet werden kann.

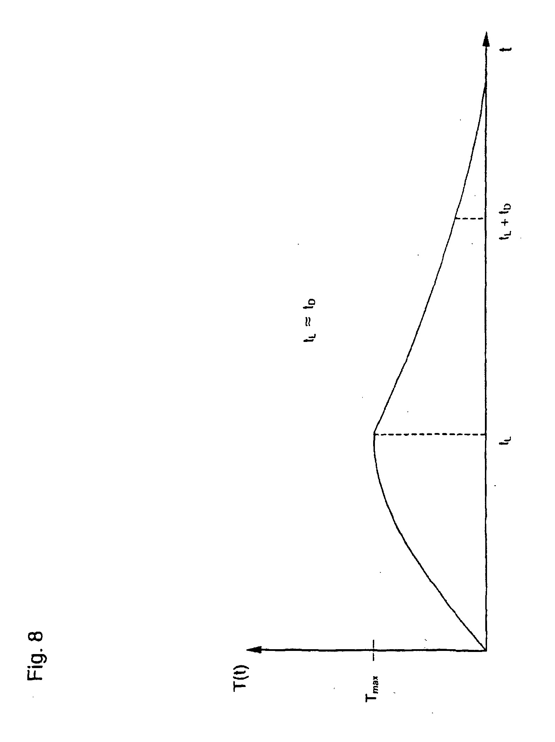

Die Figur 8 zeigt in einem Diagramm den Temperaturverlauf für den Fall, daß die Lichtimpulsdauer annähernd der Diffusionszeit $t_D$ entspricht.

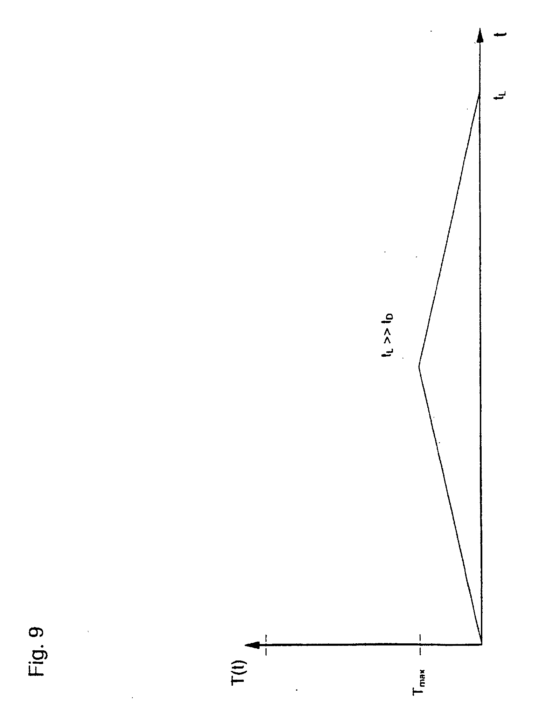

Bei dem in Figur 9 gezeigten Temperaturverlauf ist die Lichtimpulsdauer wesentlich größer als die Diffusionszeit $t_D$.

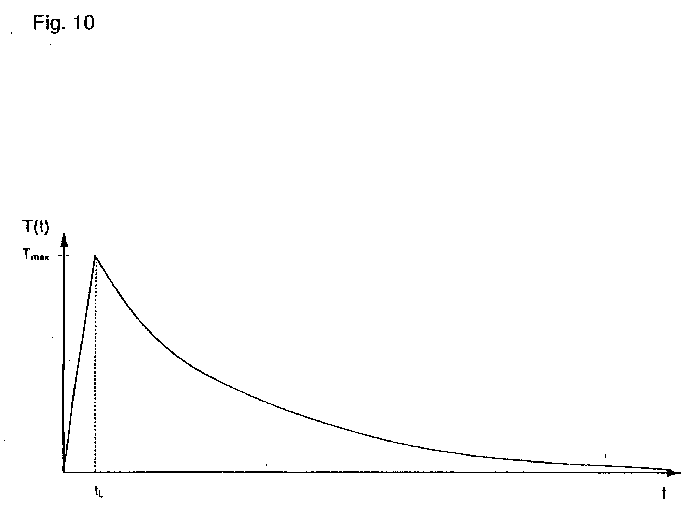

Bei dem in der Figur 10 dargestellten Diagramm ist der Temperaturverlauf, bei einem Zweischichtsystem, mit einer Schicht mit guten Wärmeleitwert und einer Schicht mit schlechtem Wärmeleitwert bei kurzer Lichtimpulsdauer, dargestellt. Während der Temperaturabfallphase ist eindeutig die Änderung des Krümmungsverlaufes im Temperaturabfall wiedergegeben. Eine logarithmische Auswertung erhöht die Unterscheidbarkeit der einzelnen Komponenten des Schichtsystems (Kurvenanpassung mit 2 Exponenten für die beiden Schichten und einem dritten Exponenten für das Substrat). In gleicher Weise kann eine Polynomanpassung durchgeführt werden.

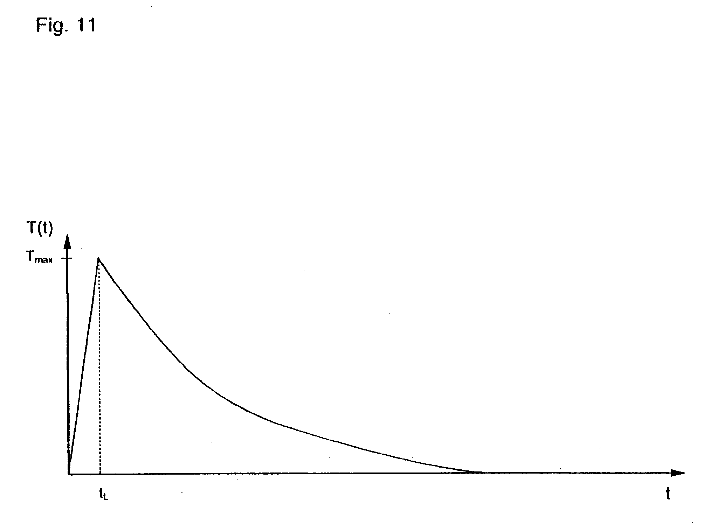

Die Figur 11 gibt den Temperaturverlauf bei einem Zweischichtsystem, das aus zwei Schichten mit gutem Wärmeleitwert, mit gleichen Dicken, wie in Figur 10 gebildet ist, wieder. In der Phase des Temperaturabfalles ist, die Änderung der Krümmung deutlich geringer als im Falle der in Figur 10 dargestellten Kurve und die Temperatur sinkt wesentlich schneller ab.

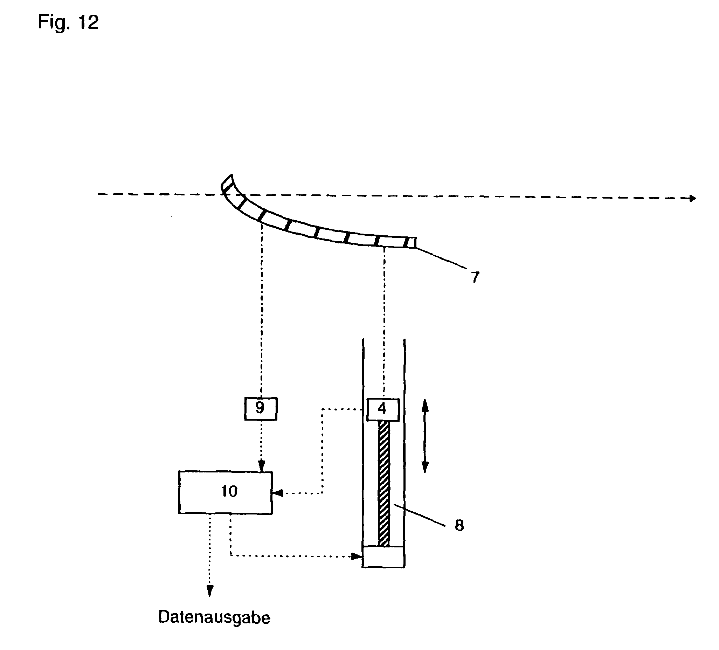

In der Figur 12 ist ein schematischer Meßaufbau einer erfindungsgemäßen Vorrichtung dargestellt, an der das Meßobjekt 7 translatorisch entlang der gestrichelt gezeichneten Linie bewegbar ist. Das photothermische Meßgerät 4 ist in einer translatorisch entsprechend der mit dem Doppelpfeil gezeigten Richtung (senkrecht zur Bewegungsrichtung des Meßobjektes 7) bewegbaren Einrichtung 8 aufgenommen und kann mit deren Hilfe auf das Meßobjekt 7 zu oder von diesem weg bewegt werden, um einen konstanten Meßabstand zwischen photothermischen Meßgerät 4 und Meßobjekt 7 einhalten zu können. Die Regelung erfolgt mit einem Abstandsmeßgerät 9, das bevorzugt auf optischem Wege den Abstand erfaßt. Die Meßstrahlen von optischem Abstandsmeßgerät und photothermischen Meßgerät mit anregendem Lichtimpuls und registrierendem photothermischen Detektor sind mit einer Punkt-Strich-Linie gekennzeichnet. Die Meßsignale (gepunktete Linien) des Abstandsmeßgerätes 9 werden über einen Controller 10 zur Regelung des Antriebes 8 der Einrichtung gegeben werden. Die gepunktete Linie vom photothermischen Meßgerät 4 zum Controller 10 gibt wieder, daß auch die momentane, vom idealen Zustand abweichende Position des photothermischen Meßgerätes 4 vom Controller 10 erfaßt und für eine numerische Korrektur der photothermischen Meßwerte benutzt werden kann. Mit dieser Regelung des Abstandes von Meßobjekt 7 und photothermischem Meßgerät 4 und/oder numerischer Korrektur der Meßwerte bei Abstandsänderungen kann die Meßgenauigkeit auch bei gekrümmten Meßobjekten 7 oder bei ansonsten hervorgerufenen Abstandsänderungen auf einem hohen Niveau gehalten werden. Geringe Abstandsänderungen können numerisch, große Abstandsänderungen können mit Hilfe der bewegbaren Einrichtung 8 korrigiert werden. Der Einfluß von Abstandsänderungen auf die Meßgenauigkeit ist allerdings nur dann von Bedeutung, wenn die maximale Amplitude des photothermischen Signals für die Messung relevant ist. In den meisten Fällen werden keine intensive Größen (Amplituden) sondern strukturelle Größen (zeitliche Charakteristiken) des photothermischen Signals zur Bestimmung von Schichteigenschaften verwendet, so daß Signalamplitudenschwankungen durch niederfrequente Abstandsänderungen keine Rolle spielen. Die Richtung der Datenübermittlung ist bei den gepunktet dargestellten Verbindungen mit Pfeilen gekennzeichnet. Die vom Controller 10 ausgebbaren Daten können für eine Auswertung, beispielsweise in statistischer Form und/oder direkt für die aktive Beeinflussung des Beschichtungsverfahrens verwendet werden, um auf die Beschichtungsfehler zu reagieren und die Beschichtung optimal an den Sollwerten zu halten.

**Patentansprüche**

1. Verfahren zur Bestimmung der Schichtdicke bzw. Schichtdicken, der thermischen Leitfähigkeit(en) und/oder der Schichtkontaktgüte von auf Substraten aufgetragenen Schichten bzw. Schicht-Systemen mit photothermischen Mitteln, bei dem Licht gepulst auf die zu bestimmende Schicht gerichtet und der zeitabhängige Temperaturanstieg, Temperaturabfall und/oder die maximale Amplitude photothermisch mit einem Detektor gemessen wird, **dadurch gekennzeichnet, daß** der Abstand Meßobjekt, Lichtquelle und Detektor gemessen und geregelt wird.

2. Verfahren nach Anspruch 1, **dadurch gekennzeichnet, daß** der gemessene zeitliche Temperaturverlauf mit empirisch ermittelten Temperaturverläufen, die in einer Wissensbasis gespeichert sind, einem Soll-/Istwertvergleich unterzogen werden.

3. Verfahren nach einem der Ansprüche 1 oder 2, **dadurch gekennzeichnet, daß** die Dauer des Lichtimpulses variiert wird.

4. Verfahren nach einem der Ansprüche 1 bis 3, **dadurch gekennzeichnet, daß** bei der Bestimmung zweier Schichten und unterschiedlichen dicken und/oder Material oder eine Einzelschicht und dem Substrat die Impulsdauer für die zwei Schichten oder Einzelschicht und des Substrates verschieden eingestellt wird, in der Weise, daß die Differenz der Temperaturverläufe maximal wird.

5. Verfahren nach einem der Ansprüche 1 bis 4, **dadurch gekennzeichnet, daß** Licht mit einer Wellenlänge verwendet wird, bei der die optische Eindringtiefe $D_E$ gegenüber der zu messenden Schichtdicke $D_S$ klein ist.

6. Verfahren nach einem der Ansprüche 1 bis 5, **dadurch gekennzeichnet, daß** der Temperaturanstieg und/oder der Temperaturabfall logarithmisch oder mit einer Polynomanpassung ausgewertet wird.

**7.** Verfahren nach einem der Ansprüche 1 bis 6,
**dadurch gekennzeichnet, daß** die gemessenen thermischen Werte, wie elektrische Parameter bei der Ladung und Entladung eines elektrischen Kondensators ausgewertet werden.

**8.** Verfahren nach einem der Ansprüche 1 bis 7,
**dadurch gekennzeichnet, daß** als charakteristische Größe, die Zeit bei der die maximale Temperatur $T_0$ nach Ende des Lichtimpulses auf eine Temperatur $T = T_0 * e^{-1}$ abgefallen ist, für die Auswertung ausgewertet wird.

**9.** Verfahren nach einem der Ansprüche 1 bis 8,
**dadurch gekennzeichnet, daß** der Strahldurchmesser und der Detektionsbereich, eine Auswertung mit Hilfe der Fickschen Gleichungen ermöglichend, aufeinander abgestimmt werden.

**10.** Vorrichtung zur Durchführung des Verfahrens nach Anspruch 1, wobei eine gepulste Lichtquelle (1), Licht bekannter Wellenlänge auf ein Meßobjekt (2) richtet und der bestrahlte Bereich des Meßobjektes (2) mit einem photothermischen Detektor (3) erfaßbar ist, wobei die Meßwerte einer Auswerteeinheit zur Durchführung eines Vergleiches zuführbar sind, wobei ein Abstandsmeßsystem (4) mit dem photothermischen Detektor (3) so verbunden ist, daß der Abstand des photothermischen Detektors (3) zum Meßobjekt (2) mit Hilfe einer Regelung konstant haltbar ist.

**11.** Vorrichtung nach Anspruch 10,
**dadurch gekennzeichnet, daß** die Lichtquelle (1) breitbandig ist und eine spektrale Filterung aufweist.

**12.** Vorrichtung nach Anspruch 10,
**dadurch gekennzeichnet, daß** die Lichtquelle (1) ein gepulster Laser ist.

**13.** Vorrichtung nach Anspruch 10,
**dadurch gekennzeichnet, daß** ein die Lichtimpulsdauer einstellender elektrooptischer oder elektromechanischer Verschluß vorhanden ist.

**Claims**

**1.** Method for determining the layer thickness or layer thicknesses, the thermal conductivity or conductivities and/or the layer contact quality of layers or layer systems deposited on substrates, using photothermic means, in which light is directed at the layer to be measured in a pulsed form and the rise in temperature as a function of time, fall in temperature as a function of time and/or the maximum amplitude are measured photothermically using a detector, **characterized in that** the distance between the object to be measured, the light source and the detector is measured and controlled.

**2.** Method according to Claim 1, **characterized in that** the measured time profile of the temperature is subjected to a target/real value comparison with empirically ascertained temperature profiles which are stored in a knowledge base.

**3.** Method according to one of Claims 1 or 2, **characterized in that** the length of the light pulse is varied.

**4.** Method according to one of Claims 1 to 3, **characterized in that**, in the case of measuring two layers of different thickness and/or material or one single layer and the substrate, the pulse length is adjusted differently for the two layers or the individual layer and the substrate, in such a way as to maximize the difference between the temperature profiles.

**5.** Method according to one of Claims 1 to 4, **characterized in that** the light used has a wavelength at which the optical penetration depth $D_E$ is small compared with the layer thickness $D_S$ to be measured.

**6.** Method according to one of Claims 1 to 5, **characterized in that** the temperature rise and/or temperature fall is evaluated logarithmically or with a polynomial fit.

**7.** Method according to one of Claims 1 to 6, **characterized in that** the measured thermal values are evaluated in the manner of electrical parameters for the charging and discharging of an electrical capacitor.

8. Method according to one of Claims 1 to 7, **characterized in that** the time at which the maximum temperature $T_0$ has fallen to a temperature $T = T_0 * e^{-1}$ after the end of the light pulse is evaluated as a characteristic quantity for the evaluation.

9. Method according to one of Claims 1 to 8, **characterized in that** the beam diameter and the detection range are matched to one another so as to make it possible to evaluate using Fick's equations.

10. Device for carrying out the method according to Claim 1, wherein a pulsed light source (1) directs light of a known wavelength at an object (2) to be measured, and the exposed region of the object (2) to be measured can be picked up using a photothermic detector (3), the measurements being deliverable to an evaluation unit for carrying out a comparison, a distance-measuring system (4) being connected to the photothermic detector (3) in such a way that the distance of the photothermic detector (3) from the object (2) to be measured can be kept constant using a control system.

11. Device according to Claim 10, **characterized in that** the light source (1) is a broadband light source and has a spectral filtering system.

12. Device according to Claim 10, **characterized in that** the light source (1) is a pulse laser.

13. Device according to Claim 10, **characterized in that** there is an electrooptical or electromechanical shutter which adjusts the light-pulse length.


**Revendications**

1. Procédé pour déterminer la ou les épaisseurs de couche(s), la ou les conductibilités thermiques et/ou la qualité de contact de couches ou de systèmes de couches appliquées sur des substrats, à l'aide de moyens photothermiques, selon lequel la lumière est dirigée de façon pulsée sur la couche à déterminer et l'accroissement de température, la chute de température en fonction du temps et/ou l'amplitude maximale sont mesurés par voie photothermique avec un détecteur, **caractérisé en ce qu'**on mesure et on règle la distance entre l'objet à mesurer, la source de lumière et le détecteur.

2. Procédé selon la revendication 1, **caractérisé en ce que** la variation de température mesurée dans le temps est soumise à une comparaison valeur de consigne/valeur réelle avec des variations de température déterminées de façon empirique, qui sont mémorisées dans une base de données.

3. Procédé selon l'une des revendications 1 ou 2, **caractérisé en ce qu'**on fait varier la durée de l'impulsion de lumière.

4. Procédé selon l'une des revendications 1 à 3, **caractérisé en ce que** lors de la détermination de deux couches et d'épaisseurs et/ou d'un matériau différents ou d'une couche unique et du substrat, la durée des impulsions pour les deux couches ou la couche unitaire et le substrat est différemment réglée de telle sorte que la différence des variations de température devienne maximale.

5. Procédé selon l'une quelconque des revendications 1 à 4, **caractérisé en ce qu'**on utilise une lumière ayant une longueur d'onde telle que la profondeur de pénétration optique $D_E$ est petite par rapport à l'épaisseur $D_S$ de la couche à mesurer.

6. Procédé selon l'une des revendications 1 à 5, **caractérisé en ce que** l'augmentation et/ou la chute de température sont évaluées par voie logarithmique ou par ajustement polynomial.

7. Procédé selon l'une des revendications 1 à 6, **caractérisé en ce que** les valeurs thermiques mesurées sont évaluées comme des paramètres électriques lors de la charge et la décharge d'un condensateur électrique.

8. Procédé selon l'une des revendications 1 à 7, **caractérisé en ce qu'**on évalue pour l'évaluation, comme grandeur caractéristique, le temps après la fin de l'impulsion lumineuse, où la température maximale $T_0$ a chuté à une température de $T = T_0 * e^{-1}$.

9. Procédé selon l'une des revendications 1 à 8, **caractérisé en ce que** le diamètre de rayon et la zone de détection sont ajustés l'un sur l'autre, de façon à permettre une exploitation à l'aide des équations de Fick.

10. Appareil pour la mise en oeuvre du procédé selon la revendication 1, dans lequel une source de lumière pulsée (1) dirige de la lumière de longueur d'onde connue sur un objet à mesurer (2) et la zone irradiée de l'objet à mesurer (2) peut être couverte par un détecteur photothermique, les valeurs des mesures pouvant être acheminées à une unité d'évaluation pour effectuer une comparaison, un système de mesure de distance (4) étant relié au détecteur photothermique (3) de telle sorte que la distance du détecteur photothermique (3) à l'objet à mesurer (2) puisse être maintenue constante par réglage.

11. Appareil selon la revendication 10, **caractérisé en ce que** la source de lumière (1) est à bande large et présente un filtrage spectral.

12. Appareil selon la revendication 10, **caractérisé en ce que** la source de lumière (1) est un laser pulsé.

13. Appareil selon la revendication 10, **caractérisé en ce qu'**il est prévu un obturateur électro-optique ou électromécanique réglant la durée des impulsions lumineuses.

Fig.1

A) moduliertes Licht $\longrightarrow$ thermische Welle

| Schicht | Substrat |

Fig. 2

Ersatzschaltbild

Fig. 3

Entladecharakteristik

Fig. 4

Lichtimpuls

1

thermische Strahlung

2

3

5

4

Fig. 5

Licht

1

3    6    2

5

Fig. 6

Fig. 7

Fig. 8

Fig. 9

Fig. 10

Fig. 11

Fig. 12

Datenausgabe

EP 0 803 062 B2